(19) Europäisches Patentamt
European Patent Office
Office européen des brevets

(11) Numéro de publication: **0 141 733**
**B1**

(12) # FASCICULE DE BREVET EUROPÉEN

(45) Date de publication du fascicule du brevet: **12.07.89**

(51) Int. Cl.⁴: **C 08 L 23/08**, C 08 K 5/15, C 08 G 59/42

(21) Numéro de dépôt: **84402146.9**

(22) Date de dépôt: **24.10.84**

(54) **Procédé de réticulation de polymères d'éthylène contenant des fonctions anhydride, compositions polymères réticulables et application de ces compositions à l'enduction de substrats.**

(30) Priorité: **28.10.83 FR 8317273**

(43) Date de publication de la demande: **15.05.85 Bulletin 85/20**

(45) Mention de la délivrance du brevet: **12.07.89 Bulletin 89/28**

(84) Etats contractants désignés: **AT BE CH DE FR GB IT LI LU NL SE**

(56) Documents cité:
**FR-A-1 553 031**
**GB-A-1 087 286**
**GB-A-1 145 841**
**US-A-3 637 579**
**US-A-3 760 031**

(73) Titulaire: **NORSOLOR S.A., Tour Aurore Place des Reflets, F-92080 Paris la Defense Cédex 5 (FR)**

(72) Inventeur: **Nicco, Adrien, 12, rue de l'Egalité, F-62400 Béthune (FR)**
Inventeur: **Hubert, Jérôme, 14, rue de Vouillé, F-75015 Paris (FR)**
Inventeur: **Druz, Jacques, 22, rue Erckmann Chatrian, F-67000 Strasbourg (FR)**
Inventeur: **Lambla, Morand, 21, rue Albert Camus Hoenheim, F-67800 Bischheim (FR)**

(74) Mandataire: **Dubost, Thierry, c/o NORSOLOR Service Propriété Industrielle B.P. 57, F-62670 Mazingarbe (FR)**

**EP 0 141 733 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention concerne un procédé de réticulation de polymères de l'éthylène contenant des fonctions anhydride, des compositions polymères réticulables et l'application de ces compositions à l'enduction de substrats.

Divers procédés sont connus et utilisés industriellement pour provoquer la réticulation du polyéthylène dans des conditions efficaces, mais ils présentent des inconvénients qui limitent leur emploi. Ainsi, le procédé d'incorporation de générateurs de radicaux libres (peroxyde) est difficile à mettre en oeuvre, principalement pour les motifs suivants:

- un excès de réactif (1 à 3 en masse) est utilisé pour compenser le rendement, assez faible, de formation des ponts et les pertes de réactif causées par les additifs antioxydants ou antivieillissement,
- l'incorporation du réactif peroxyde exige un contrôle rigoureux de la température pour éviter une réaction prématurée avec décomposition du réactif et réticulation partielle du polyéthylène, car la réaction initiale a une énergie d'activation élevée (30 000 à 40 000 calories par mole) et il suffit d'une montée de température de 10° C pour provoquer une accélération importante de la réaction,
- la réaction est considérablement ralentie entre 10° et 100° C pour la même raison que ci-dessus et il est impossible d'atteindre la réaction après formage et refroidissement; il faut alors accélérer la réaction en portant à température élevée, 190° à 220° C, de manière à réaliser la réaction en 30 à 60 secondes, ce qui exige une installation considérable et de fonctionnement exigeant (four de 100 m de long pour le revêtement de câbles électriques, chauffage par circulation de vapeur ou de gaz sous pression de 10 à 20 bars, sortie en continu sous pression...),
- choix très limité des additifs antioxydants ou antivieillissement pour éviter d'inhiber la réticulation et, par suite, propriétés de tenue au vieillissement moyennement bonnes.

Un autre procédé comporte le greffage sur le polyéthylène de réactif du genre vinyltriéthoxysilane; il permet de réticuler dans des conditions plus douces, mais il faut signaler les difficultés suivantes:

- le greffage exige le malaxage avec le réactif silane et une faible dose d'initiateur peroxyde, ce qui rend la réaction sensible à de faibles doses d'inhibiteur et cause des productions de qualité peu constante avec le risque d'obtention de produit insuffisamment réticulable,
- si l'on veut contrôler la qualité du polymère greffé, il faut le stocker après granulation et refroidissement, ce qui exige des conditions de stockage très sévères pour éviter la réticulation du stock par l'humidité; par contre, si l'on veut économiser la granulation et le stockage, on risque de fabriquer des câbles de coût élevé dont la réticulation pourra se révéler insuffisante,
- le formage par extrusion doit être suivi par un stockage prolongé en milieu humide et chaud pour assurer la réticulation assez rapidement (24 H) pour de faibles épaisseurs (1 à 3 mm),
- la tenue au vieillissement sera bonne si l'on injecte après greffage, avant formage, les additifs antivieillissement.

Pour éviter ces inconvénients, le procédé suivant l'invention utilise une composition à base de polyéthylène modifié, renfermant des groupes anhydride maléique réactifs.

On connaît déjà des polymères ou copolymères d'oléfines contenant des motifs dérivés de l'anhydride maléique. Ainsi le brevet américain n° 3 637 579 décrit une composition adhésive contenant un copolymère d'une mono-α-oléfine à chaîne droite et d'anhydride maléique, un polyépoxyde liquide et une charge pulvérulente. Le copolymère décrit dans ce document doit être considéré comme un polyanhydride et non comme un copolymère à faible teneur en anhydride maléique puisque la structure macromoléculaire comprend autant de motifs α-oléfine que de motifs anhydride. Les compositions selon ce brevet sont inutilisables lors de la fabrication de revêtements de câbles. Le brevet américain n° 3 760 031 concerne également des compositions adhésives, destinées à favoriser l'adhésion de copolymères éthylène-acétate de vinyle sur un matériau solide, comprenant (A) un produit greffé obtenu par réaction d'un copolymère éthylène-acétate de vinyle, ou d'un dérivé, avec un acide carboxylique insaturé ou son anhydride et (B) un composé ayant au moins 2 groupes époxyde. Le produit greffé (A) est peu stable thermiquement et dégage de l'acide acétique corrosif entre 150 et 250° C, ce qui est indésirable pour des produits qui doivent présenter une bonne tenue à une exposition éventuelle à haute température.

Un objet de l'invention consiste en un procédé de réticulation consistant à faire réagir un polymère comprenant des motifs dérivés de l'éthylène et des motifs dérivés de l'anhydride maléique avec au moins un composé polyépoxyde en présence d'au moins un catalyseur, caractérisé en ce que la réaction est effectuée à une température de 10° à 160° C, sous une pression de 1 à 300 bars et pendant au moins 0,5 heure, et en ce que le polymère est obtenu par copolymérisation d'éthylène et d'anhydride maléique à haute température et sous haute pression en présence d'un initiateur de radicaux libres et en présence, le cas échéant, de propylène et/ou d'au moins un ester d'acide carboxylique insaturé et d'un alcool ayant de 1 à 12 atomes de carbone et contient de 42 à 99 % en poids de motifs dérivés de l'éthylène et le cas échéant d'une α-oléfine, de 1 à 8 % en poids de motifs dérivés de l'anhydride maléique et de 0 à 50 % en poids de motifs dérivés dau moins un troisième monomère choisi parmi les esters des acides carboxyliques insaturés et d'un alcool ayant de 1 à 12

atomes de carbone.

Le polymère soumis à la réticulation est obtenu par copolymérisation d'éthylène et d'anhydride maléique a haute température et sous haute pression en présence d'un initiateur de radicaux libres. Outre ces deux composés, le mélange soumis à la copolymérisation peut en outre contenir au moins un troisième monomère choisi parmi le propylène et les esters des acides carboxyliques insaturés et d'un alcool ayant de 1 à 12 atomes de carbone, plus particulièrement les acrylates, méthacrylates et maléates d'alkyle dont le groupe alkyle possède de 1 à 12 atomes de carbone. Lors de l'utilisation du propylène comme comonomère, la quantité de motifs propylène incorporés dans la chaîne macromoléculaire est généralement faible. Le polymère obtenu de cette façon peut contenir de 1 à 8 % en poids de motifs dérivés de l'anhydride maléique.

Le composé polyépoxyde mis à réagir avec le polymère a pour formule générale:

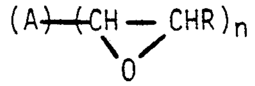

dans laquelle A est un groupe polyfonctionnel de valence n $\geqslant$ 2 et R un radical hydrocarboné. On utilise avantageusement les polyglycidyléthers de composés polyhydroxylés. Parmi ceux-ci on choisit avantageusement les composés polyépoxydes de type aliphatique, particulièrement les polyglycidyléthers de polyalcools tels les diglycidyléthers des α-ω diols comme le diglycidyléther du butanediol, de l'hexanediol, du paracyclohexyldiméthanol, du néopentylglycol, tels les triglycidyléthers de triols comme le triglycidyléther du triméthylolpropane, le triglycidyléther du glycérol, tels les tétraglycidyléthers de tétrols comme le tétraglycidyléther du pentaérythritol. Parmi les composés provenant de l'époxydation de composés oléfiniques on choisit avantageusement l'huile de soja époxydée.

Compte tenu du taux de fonctions anhydride contenues dans le polymère réticulable, la quantité de composé polyépoxyde à utiliser pour provoquer la réticulation est avantageusement comprise entre 1 et 10 parties en poids pour 100 parties en poids de polymère. Avantageusement elle est telle que le rapport molaire

$$\frac{\text{fonctions époxyde du composé polyépoxyde}}{\text{fonctions anhydride du polymère}}$$

soit compris entre 0,5 et 1,1.

La réticulation du polymère a lieu par réaction entre les fonctions anhydride dudit polymère et les fonctions époxyde du composé polyépoxyde, en présence d'un catalyseur. Avantageusement le catalyseur est une amine tertiaire. On utilise par exemple la diméthyllaurylamine, la N-butylmorpholine, la N,N-diméthylcyclohexylamine, la benzyldiméthylamine, la pyridine, la diméthylamino-4-pyridine, le méthyl-1-imidazole, la tétraméthyléthylènediamine, la tétraméthylguanidine, la triéthylènediamine, la tétraméthylhydrazine, la N,N-diméthylpipérazine, la N,N,N'N'-tétraméthyl-1,6-hexanediamine.

La quantité de catalyseur amine tertiaire utilisée est avantageusement comprise entre 0,02 et 2 parties en poids pour 100 parties en poids de polymère.

La réticulation (formation de ponts entre les chaînes macromoléculaires du polymère au moyen des composés polyépoxydes) a lieu, préférentiellement en absence d'humidité, à une température comprise entre 10 et 160°C, pendant une durée fonction inverse de la température et supérieure ou égale à 0,5 heure. La réticulation peut également être effectuée à des températures différentes, par exemple progressives, pendant des durées éventuellement différentes.

Un autre objet de la présente invention concerne une composition polymère réticulable utilisable dans un procédé de réticulation tel que décrit ci-dessus et comprenant:

(A) un polymère d'éthylène et d'anhydride maléique,
(B) au moins un composé polyépoxyde, et
(C) au moins un catalyseur de réaction entre les fonctions anhydride et les fonctions époxyde, caractérisée en ce qu'elle contient:
- 100 parties en poids d'un polymère (A) obtenu par copolymérisation d'éthylène et d'anhydride maléique à haute température et sous haute pression en présence d'un initiateur de radicaux libres et en présence, le cas échéant, de propylène et/ou d'au moins un ester d'acide carboxylique insaturé et d'un alcool ayant de 1 à 12 atomes de carbone et contenant:
a) de 42 à 99 % en poids de motifs dérivés de l'éthylène et le cas échéant d'une α-oléfine,
b) de 1 à 8 % en poids de motifs dérivés de l'anhydride maléique,
c) de 0 à 50 % en poids de motifs dérivés d'au moins un troisième monomère choisi parmi les esters des acides carboxyliques insaturés et d'un alcool ayant de 1 à 12 atomes de carbone,
- de 1 à 10 parties en poids d'un composé polyépoxyde (B) et
- de 0,02 à 2 parties en poids d'au moins un catalyseur (C).

Les composés polyépoxydes et le catalyseur sont avantageusement choisis parmi les composés respectivement cités dans la description qui précède.

Les compositions polymères réticulables sont préparées avantageusement selon un procédé qui consiste, et c'est là un autre objet de l'invention, à malaxer le mélange de polymère, de composé polyépoxyde et de catalyseur à une température supérieure ou égale à la température de fusion du polymère et inférieure ou

égale à 150°C pendant une durée comprise entre 1 minute et 15 minutes. On met ensuite en forme le mélange malaxe, le cas échéant sous pression, à l'état de feuilles, films, joncs ou granulés, et enfin on refroidit la forme obtenue. Il va de soi que le temps de malaxage est d'autant plus court que la température est plus élevée. Les compositions restent thermoplastiques pendant la mise en oeuvre et le formage par tout procédé connu, appliqué aux matériaux thermoplastiques. Après formage, le produit subit une réaction de pontage du polymère en le maintenant entre 10 et 160°C, préférentiellement en l'absence d'humidité, pendant une durée d'au moins 0,5 heure.

Avantageusement, les compositions polymères réticulables sont obtenues selon une variante qui consiste à préparer des mélanges-maîtres contenant respectivement et séparément:

A) le polymère et le catalyseur amine tertiaire, la teneur en catalyseur dans ce mélange-maître étant supérieure à ce qu'elle doit être dans la composition polymère réticulable,

B) le polymère et le composé polyépoxyde, la teneur en composé polyépoxyde dans ce mélange-maître étant supérieure à ce qu'elle doit être dans la composition polymère réticulable,

puis à mélanger à sec ces mélanges-maîtres, en présence ou non de polymère non adjuvanté. La quantité de polymère non adjuvanté, à ajouter éventuellement, est fonction de la teneur de chaque mélange-maître en catalyseur et en composé polyépoxyde, respectivement. De même la proportion de mélange-maître A par rapport au mélange-maître B est fonction de ces teneurs. Cette variante présente l'avantage que chacun des mélanges-maîtres et le polymère étant à l'état de poudre ou de granulés, les compositions polymères réticulables peuvent être obtenues de façon simple par mélange à sec. Chaque mélange-maître peut être conservé sans présenter d'évolution avec le temps, même après stockage prolongé. Les compositions polymères réticulables à l'état de poudre ou de granulés sont ensuite traitées sur une machine de transformation et mises en forme comme décrit ci-dessus.

La réaction provoque une réticulation de plus en plus poussée avec le temps et procure une amélioration intéressante du polymère d'éthylène et d'anhydride maléique principalement pour les propriétés mécaniques (résistance à la rupture, tenue au fluage, tenue à la fissuration, etc...), non seulement aux températures inférieures à la fusion mais aussi aux températures de 100 à 200°C lorsque le polyéthylène non modifié perd toute résistance. En outre, il est possible d'incorporer dans la composition une grande variété d'additifs antioxydants, antivieillissement à la lumière, pigments, etc... comme dans le polyéthylène, sans perturber fortement la réaction de réticulation ou réduire les propriétés obtenues. Il est possible ainsi d'utiliser le polyéthylène ou des copolymères réticulés dans des conditions de température et de contrainte pour lesquelles les polymères non réticulés sont inutilisables.

Les compositions selon l'invention sont utiles pour tous les usages pour lesquels on utilise déjà du polyéthylène réticulé, en particulier l'enduction d'un substrat, par exemple les câbles electriques dont l'isolant doit conserver des propriétés convenables lors d'échauffements momentanés et après un usage prolongé à chaud, vieillissement aux intempéries, séjour dans l'eau, etc... Le substrat peut être destiné à être fixé par collage à un autre substrat. Dans ce cas on utilise avantageusement des compositions obtenues à partir de polymères ayant un indice de fluidité compris entre 5 et 500 dg/min. On incorpore le réactif polyépoxyde quelques secondes à quelques minutes avant la mise en place: la composition a les propriétés, au refroidissement, analogues à un adhésif thermofusible, puis elle réticule progressivement, ce qui améliore ses propriétés mécaniques.

D'autres applications sont accessibles, par exemple les tuyaux d'eau chaude pour le chauffage, les tuyaux résistants à la corrosion et à la fissuration pour des solutions aqueuses et divers produits, les profilés extrudés en copolymères contenant 5 à 20 en poids de motifs dérivés d'au moins un ester de l'acide acrylique et dont la souplesse et la forme ne permettent pas une réticulation en continu dans des conditions habituelles sans déformation notable selon le procédé de l'invention, le profilé extrudé peut être refroidi rapidement et réticulé ensuite par séjour à température modérée.

Les exemples suivants ont pour but d'illustrer l'invention. Dans ces exemples, les abréviations utilisées ont les significations suivantes:

IF: indice de fluidité exprimé en dg/min et déterminé selon la norme ASTM-D 1238/73,
ρ: masse volumique exprimée en $g/cm^3$ et déterminée selon la norme NF T 51-063.

Les propriétés mécaniques suivantes sont déterminées selon la norme ASTM D 638-80:

SE: seuil élastique exprimé en bars
AR: allongement à la rupture exprimé en %
RR: résistance à la rupture exprimée en bars.

On détermine également:

∅: vitesse moyenne de fluage en 10 minutes, exprimée en $\%.min^{-1}$ et
At: allongement relatif total, exprimé en %,

au moyen d'un test consistant à soumettre des éprouvettes en forme d'haltères dont la partie étroite mesure 30 mm de long, 4 mm de large et 0,4 mm d'épaisseur à un test de fluage à 150° C. Les éprouvettes sont fixées entre 2 machoires et on mesure leur longueur Lo initiale à 150° C, la contrainte appliquée aux éprouvettes étant faible (machoires équilibrées). On applique alors une contrainte de 4 bars en traction et on mesure la longueur $L_1$ des éprouvettes après 1 minute et la longueur $L_{10}$ après 10 minutes. On a alors At = $\frac{L_{10} - L_o}{L_o}$

On calcule ∅ = $\frac{L_{10} - L_1}{10\,L_o}$

**Exemples 1 à 6 - Préparation de compositions réticulables**

On a utilisé un terpolymère contenant 89,1 % en poids de motifs éthylène, 3,3 en poids de motifs anhydride maléique et 7,6 % en poids de motifs acrylate d'éthyle ayant les caractéristiques suivantes:

IF: 6,4 dg/min,
ρ: 0,940 g/cm$^3$,
Température de fusion: 100° C.

Ce terpolymère a été malaxé à 130° C pendant 8 mn avec, comme composé polyépoxyde, du diglycidyléther du néopentylglycol (DGENG) et, comme catalyseur, de l'hexaméthyléthylènediamine (HMED) de formule $(CH_3)_2N\text{-}C(CH_3)_2\text{-}CH_2\text{-}N(CH_3)_2$, en quantités (en parties en poids pour 100 parties en poids de terpolymère) telles que précisées dans le tableau I.

La composition ainsi malaxée est moulée en éprouvettes de 0,4 mm d'épaisseur. Les éprouvettes sont ensuite soumises à réticulation à une température T (exprimée en ° C) et pendant une durée t (exprimée en jours). Sur les éprouvettes réticulées (à l'exception des exemples 1 et 2 comparatifs), on a mesuré les propriétés suivantes: ∅, taux d'insolubles (TI) mesuré par extraction au xylène à 142° C pendant 48 h.

**Exemples 7 et 8**

A partir des matières premières décrites aux exemples 1 à 6, la préparation de compositions réticulables par malaxage a été effectuée dans un plastographe HAAKE-RHEOCORD, suivie de leur réticulation pendant 10 minutes à la température de 160° C.

On trouve dans le tableau II les quantités de catalyseur (HMED) et de composé polyépoxyde (DGENG) utilisées en parties pour 100 parties de copolymère, ainsi que le rapport molaire $\frac{\text{fonctions epoxyde}}{\text{fonctions anhydride}}$ = R(e)

**Exemples 9 à 16**

On a utilisé un terpolymère contenant 90,3 % en poids de motifs éthylène, 2,6 % en poids de motifs anhydride maléique et 7 % en poids de motifs acrylate d'éthyle.

Ce terpolymère a été malaxé dans les conditions des exemples 1 à 6 avec le catalyseur et le composé polyépoxyde, puis réticulé à une température de 55° C.

On a fait figurer au tableau III:

- la nature et la quantité (parties pour 100 parties de terpolymère) du catalyseur utilise,
- la nature et la quantité (parties pour 100 parties de terpolymère) du composé polyépoxyde utilisé,
- la durée t (jours) de la réticulation,
- la vitesse de fluage ∅
- l'allongement total At

**Exemples 17 et 18**

On a utilisé un terpolymère contenant 48 en poids de motifs dérivés de l'éthylène, 2,8 % en poids de motifs dérivés de l'anhydride maléique et 49 % en poids de motifs dérivés de l'acrylate d'éthyle. Ce terpolymère est très mou et collant; il a un IF de 12 dg/min.

100 parties en poids de ce terpolymère ont été malaxées à 80° C pendant 6 min avec 2,6 parties en poids de DGENG et 0,8 partie en poids de HMED. On a fait figurer dans le tableau IV la température T(° C) et le temps de réticulation (en heures) ainsi que la vitesse de fluage ∅ et l'allongement total At à 150° C déterminés comme précédemment.

**Exemples 19 à 22**

Dans un réacteur autoclave, sous une pression de 1 900 bars et à une température de 200°C, on a terpolymérisé en continu de l'éthylène, de l'acrylate d'éthyle et de l'anhydride maléique pour obtenir un terpolymère ayant un IF de 6,7 dg/min, contenant 92 % en poids de motifs dérivés de l'éthylène, 3 % en poids de motifs dérivés de l'anhydride maléique et 5 % en poids de motifs dérivés de l'acrylate d'éthyle.

A partir de ce terpolymère, on a préparé par malaxage à 130°C pendant 3 min., puis granulation à froid, les deux mélanges-maîtres (M.M.) A et B suivants. Le M.M. A contient 98,4 parties en poids de terpolymère et 1,6 partie en poids de N,N,N',N'-tétraméthyl-1,6-hexanediamine. Le M.M. B contient 93,4 parties en poids de terpolymère et 6,6 parties en poids de DGENG.

Par mélange à sec de 12,5 parties en poids du M.M. A, de 50 parties en poids du M.M. B et de 37,5 parties en poids de terpolymère, on obtient une composition réticulable que l'on extrude en continu sur une extrudeuse SCHWABENTHAN de diamètre D = 30 mm et de longueur 25 D avec une vitesse de vis de 40 T/min. Cette extrudeuse a été équipée d'une filière annulaire de diamètre extérieur 4,3 mm et de diamètre intérieur 2,6 mm. La température matière en sortie de filière est maintenue à 120°C.

Les tubes ainsi obtenus sont stockés à l'air à différentes temperatures.

On a mesuré sur ces tubes, après les durées de stockage indiquées au tableau V les propriétés mécaniques RR et AR.

De plus, on a mesuré l'allongement relatif total Art exprimé en % obtenu après 15 min sur des tubes soumis à une contrainte de traction de 2 bars à 200°C.

**Exemple 23**

On a préparé un terpolymère et un mélange-maître A dans les mêmes conditions qu'aux exemples 19 à 22.

Par mélange à sec de 12,5 parties en poids du M.M. A, de 20 parties en poids de LOPOX 810® (diglycidyléther commercial du bisphénol A, ayant un équivalent époxy de 810 et un point de ramollissement DURRAN de 88°C) et de 67,5 parties en poids de terpolymère, on a obtenu une composition réticulable que l'on a extrudé dans les mêmes conditions qu'aux exemples 19 à 22.

Les propriétés mécaniques et l'allongement relatif total ont été mesurés dans les mêmes conditions et figurent au tableau V.

**Exemple 24**

Dans un réacteur autoclave, sous une pression de 2000 bars et à une température de 210°C, on copolymérise en continu de l'éthylène et de l'anhydride maléïque pour obtenir un copolymère ayant un IF de 23 dg/min contenant 94,3 % en poids de motifs dérivés de l'éthylène et 5,7 % en poids de motifs dérivés de l'anhydride maléïque.

On a réalisé par mélange sur calandre à 110°C pendant 3 min. une composition réticulable contenant 93,8 parties en poids de copolymère, 6 parties en poids de DGENG et 0,2 partie en poids de N,N,N',N'-tétraméthyl-1,6-hexanediamine.

Cette composition a été ensuite moulée à 110°C pour obtenir un échantillon pouvant être introduit dans la chambre de l'optimètre MIE (Durée de moulage : 3 min). On a suivi alors l'évolution de la réticulation par l'enregistrement en continu du couple de torsion. La chambre de l'optimètre était régulée à 140°C.

Les valeurs du couple de réticulation obtenues après différents temps à 140°C ainsi que le taux d'insolubles mesuré sur l'échantillon après 3 h à 140°C sont indiquées dans le tableau VI.

**Exemple 25 (comparatif)**

Le tableau VI présente aussi les résultats obtenus avec une composition ne contenant pas de catalyseur amine tertiaire (94 parties en poids de copolymère et 6 parties en poids de DGENG).

**Tableau I**

| Exemple | HMED | DGENG | T°C | t | ∅ | At | SE | RR | AR | T.I. |
|---|---|---|---|---|---|---|---|---|---|---|
| 1 | 0 | 0 | 20 | - | > 180 | rupture | 43 | 121 | 816 | n.d. |
| 2 | 0 | 3,2 | 20 | - | > 180 | rupture | n.d. | n.d. | n.d. | n.d. |

| | | | | | | | | | | |
|---|---|---|---|---|---|---|---|---|---|---|
| 3 | 0,1 | 3,2 | 80 | 11 | 2 | 60 | 73 | 151 | 190 | 67,4 |
| 4 | 0,7 | 3,2 | 80 | 11 | 1,5 | 20 | n.d. | n.d. | n.d. | 82,5 |
| 5 | 0,1 | 3,2 | 20 | 240 | 4,5 | 80 - 120 | 68 | 225 | 430 | 30,4 |
| 6 | 0,4 | 3,2 | 20 | 8 | 15 | n.d. | 70 | 155 | 260 | 22,8 |

n.d. non déterminé

**Tableau II**

| Exemple | HMED | DGENG | R(e) |
|---|---|---|---|
| 7 | 0,4 | 1,6 | 0,45 |
| 8 | 0,4 | 6,4 | 1,80 |

**Tableau III**

| | Catalyseur | | Composé Polyépoxyde | | | | |
|---|---|---|---|---|---|---|---|
| Exemple | Nature | Quantité | Nature | Quantité | t | ∅ | At |
| 9 | HMED | 0,4 | DGEBA* | 4,1 | 7 | n.d. (***) | n.d. |
| 10 | HMED | 0,4 | HSE* | 7,4 | 22 | n.d. | n.d. |
| 11 | HMED | 0,4 | DGEMD* | 2,7 | 22 | n.d. | n.d. |
| 12 | HMED | 0,4 | TGIC* | 2,3 | 22 | n.d. | n.d. |
| 13 | PDAP** | 0,2 | DGENG | 2,6 | 22 | 4 | 50 |
| 14 | TMG** | 0,2 | DGENG | 2,6 | 22 | 2,5 | 40 |
| 15 | MIA** | 0,2 | DGENG | 2,6 | 22 | 2 | 45 |
| 16 | BDMA** | 0,8 | DGENG | 2,6 | 22 | 2,5 | 55 |

* DGEBA: diglycidyléther du bis-phénol A
HSE: huile de soja époxydée
DGEHD: diglycidyléther de l'hexanediol-1,6
TGIC: triglycidylisocyanurate
** PDAP: para(diméthylamino)pyridine
TMG: tétraméthylguanidine
MIA: méthyl-1-imidazole
BDMA: benzyldiméthylamine
*** n.d.: non déterminé

**Tableau IV**

| Exemple | T°C | t | ∅ | At |
|---|---|---|---|---|
| 17 | 160 | 0,5 | 6,4 | 102 |
| 18 | 55 | 168 | 1,9 | 19,5 |

**Tableau V**

| Exemples | Température de stockage (°C) | Durée de stockage (jours) | RR | AR | Art |
|---|---|---|---|---|---|
| 19 | 23 | 30 | 136 | 280 | 76 |
| 20 | 23 | 57 | n.d.* | n.d. | 26 |
| 21 | 55 | 1 | 153 | 231 | 25 |
| 22 | 80 | 1 | 147 | 168 | 14 |
| 23 | 80 | 11 | 185 | 172 | 27 |

* n.d.: non déterminé

**Tableau VI**

| Exemple | Couple de réticulation (daNm) Après 30 min | Après 1 heure | Après 3 heures | Taux d'insolubles |
|---|---|---|---|---|
| 24 | 0,345 | 0,385 | 0,415 | 73,5 % |
| 25 | 0,06 | 0,065 | 0,08 | 2 % |

**Revendications**

1. Procédé de réticulation consistant à faire réagir un polymère comprenant des motifs dérivés de l'éthylène et des motifs dérivés de l'anhydride maléique avec au moins un composé polyépoxyde en présence d'au moins un catalyseur, caractérisé en ce que la réaction est effectuée à une temperature de 100 à 160°C, sous une pression de 1 à 300 bars et pendant au moins 0,5 heure, et en ce que le polymère est obtenu par copolymérisation d'éthylène et d'anhydride maléique à haute température et sous haute pression en présence d'un initiateur de radicaux libres et en présence, le cas échéant, de propylène et/ou d'au moins un ester d'acide carboxylique insaturé et d'un alcool ayant de 1 à 12 atomes de carbone et contient de 42 à 99 % en poids de motifs dérivés de l'éthylène et le cas échéant d'une α-oléfine, de 1 à 8 % en poids de motifs dérivés de l'anhydride maléique et de 0 à 50 % en poids de motifs dérivés d'au moins un troisième monomère choisi parmi les esters des acides carboxyliques insaturés et d'un alcool ayant de 1 à 12 atomes de carbone.

2. Procédé selon la revendication 1, caractérisé en ce que la quantité de composé polyépoxyde est comprise entre 1 et 10 parties en poids pour 100 parties en poids de polymère.

3. Procédé selon l'une des revendications 1 et 2, caractérisé en ce que le rapport molaire $\frac{\text{fonctions epoxyde du composé polyepoxyde}}{\text{fonctions anhydride du polymère}}$ est compris entre 0,5 et 1,1.

4. Procédé selon l'une des revendications 1 à 3, caractérisé en ce que le composé polyépoxyde est un composé aliphatique.

5. Procédé selon la revendication 4, caractérisé en ce que le composé polyépoxyde aliphatique est choisi parmi le diglycidyléther du néopentylglycol, l'huile de soja époxydée, le diglycidyléther de l'hexanediol-1,6.

6. Procédé selon l'une des revendications 1 à 5, caractérisé en ce que le catalyseur est une amine tertiaire.

7. Procédé selon l'une des revendications 1 à 6, caractérisé en ce que le catalyseur est utilisé à raison de 0,02 à 2 parties en poids pour 100 parties en poids de polymère.

8. Procédé selon la revendication 1, caractérisé en ce que ledit troisième monomère est choisi parmi les acrylates, méthacrylates et maléates d'alkyle dont le groupe alkyle possède de 1 à 12 atomes de carbone.

9. Composition réticulable utilisable dans un procédé selon une des revendications 1 à 8 et comprenant:

(A) un polymère d'éthylène et d'anhydride maléique,

(B) au moins un composé polyépoxyde, et

(C) au moins un catalyseur de réaction entre les fonctions anhydride et les fonctions époxyde, caractérisée en ce qu'elle contient:

- 100 parties en poids d'un polymère (A) obtenu par copolymérisation d'éthylène et d'anhydride maléique à haute température et sous haute pression en présence d'un initiateur de radicaux libres et en présence, le cas échéant, de propylène et/ou d'au moins un ester d'acide carboxylique insaturé et d'un alcool ayant de 1 à 12 atomes de carbone et contenant:

a) de 42 à 99 % en poids de motifs dérivés de l'éthylène et le cas échéant d'une α-oléfine,

b) de 1 à 8 % en poids de motifs dérivés de l'anhydride maléique,

c) de 0 à 50 % en poids de motifs dérivés d'au moins un troisième monomère choisi parmi les esters des acides carboxyliques insaturés et d'un alcool ayant de 1 à 12 atomes de carbone,

- de 1 à 10 parties en poids d'un composé polyépoxyde (B) et
- de 0,02 à 2 parties en poids d'au moins un catalyseur (C).

10. Composition selon la revendication 9, caractérisée en ce qu'elle est obtenue par mélange à sec d'un premier mélange-maître contenant le polymère et le catalyseur, d'un second mélange-maître contenant le polymère et le composé polyépoxyde et, le cas échéant de polymère non adjuvanté, et qu'elle se présente à l'état de poudre ou de granulés.

11. Procédé de préparation d'une composition suivant la revendication 9, caractérisé en ce qu'il consiste à malaxer le mélange de polymère, de composé polyépoxyde et de catalyseur à une température supérieure ou égale à la température de fusion du polymère et inférieure ou égale à 150°C pendant une durée comprise entre 1 minute et 15 minutes.

12. Application d'une composition suivant une des revendications 9 et 10 à l'enduction d'un substrat, par réticulation selon le procédé de la revendication 1.

13. Application selon la revendication 12, caractérisée en ce que le substrat est un câble électrique.

14. Application selon la revendication 12, caractérisée en ce que ladite composition est utilisée comme adhésif thermofusible, le polymère ayant un indice de fluidité compris entre 5 et 500 dg/min.

**Patentansprüche**

1. Verfahren zum Vernetzen, das darin besteht, ein von Äthylen abstammende Einheiten und von Maleinsäureanhydrid abstammende Einheiten enthaltendes Polymer mit mindestens einer Polyepoxidverbindung in Gegenwart mindestens eines Katalysators reagieren zu lassen, dadurch gekennzeichnet, daß die Reaktion bei einer Temperatur von 100 bis 160°C, unter einem Druck von 1 bis 300 bar und während mindestens einer halben Stunde erfolgt, und daß das Polymer durch Copolymerisation von Äthylen und Maleinsäureanhydrid bei hoher Temperatur und unter hohem Druck in Gegenwart eines Initiators in Form freier Radikale und gegebenenfalls in Gegenwart von Propylen und/oder mindestens einem Ester einer ungesättigten Karbonsäure und einem Alkohol mit 1 bis 12 Kohlenstoffatomen erhalten wird und 42 bis 99 Gew.-% von Äthylen und gegebenenfalls von einem α-Olefin abstammende Einheiten, 1 bis 8 Gew.-% von Maleinsäureanhydrid abstammende Einheiten und 0 bis 50 Gew.-% von mindestens einem dritten Monomer abstammende Einheiten enthält, das ausgewählt ist aus der Gruppe bestehend aus den Estern von ungesättigten Karbonsäuren und einem Alkohol mit 1 bis 12 Kohlenstoffatomen.

2. Verfahren nach Anspruch 1, dadurch gekennzeichnet, daß die Menge der Polyepoxidverbindung zwischen 1 und 10 Gewichtsteilen pro 100 Gewichtsteile des Polymers beträgt.

3. Verfahren nach Anspruch 1 oder 2, dadurch gekennzeichnet, daß das Molverhältnis Epoxidgruppen der Polyepoxidverbindung/Anhydridgruppen des Polymers zwischen 0,5 und 1,1 liegt.

4. Verfahren nach einem der Ansprüche 1 bis 3, dadurch gekennzeichnet, daß die Polyepoxidverbindung eine aliphatische Verbindung ist.

5. Verfahren nach Anspruch 4, dadurch gekennzeichnet, daß die aliphatische Polyepoxidverbindung ausgewählt ist aus der Gruppe bestehend aus Neopentylglykoldiglycidyläther, epoxidiertem Sojaöl und Hexandiol-1,6-diglycidyläther.

6. Verfahren nach einem der Ansprüche 1 bis 5, dadurch gekennzeichnet, daß der Katalysator ein tertiäres Amin ist.

7. Verfahren nach einem der Ansprüche 1 bis 6, dadurch gekennzeichnet, daß der Katalysator in einer Menge von 0,02 bis 2 Gewichtsteilen pro 100 Gewichtsteile des Polymers eingesetzt wird.

8. Verfahren nach Anspruch 1, dadurch gekennzeichnet, daß das genannte dritte Monomer ausgewählt ist aus der Gruppe bestehend aus den Akylacrylaten, Alkylmethacrylaten und Alkylmaleaten, deren Alkylgruppe 1 bis 12 Kohlenstoffatome besitzt.

9. Vernetzbare Zusammensetzung zur Verwendung beim Verfahren nach einem der Ansprüche 1 bis 8, enthaltend:

(A) ein Polymer von Äthylen und Maleinsäureanhydrid,
(B) mindestens eine Polyepoxidverbindung und
(C) mindestens einen Katalysator für die Reaktion zwischen den Anhydridgruppen und den Epoxidgruppen, dadurch gekennzeichnet,

daß sie enthält:

- 100 Gewichtsteile eines Polymers (A), erhalten durch Copolymerisation von Äthylen und Maleinsäureanhydrid bei hoher Temperatur und unter hohem Druck, in Gegenwart eines Initiators in Form freier Radikale und gegebenenfalls in Gegenwart von Propylen und/oder mindestens einem Ester einer ungesättigten Karbonsäure und einem Alkohol mit 1 bis 12 Kohlenstoffatomen, und enthaltend:

a) 42 bis 99 Gew.-% von Äthylen und gegebenenfalls einem α-Olefin abstammende Einheiten,
b) 1 bis 8 Gew.-% von Maleinsäureanhydrid abstammende Einheiten und
c) 0 bis 50 Gew.-% von mindestens einem dritten Monomer abstammende Einheiten, welches Monomer ausgewählt ist aus der Gruppe bestehend aus den Estern ungesättigter Karbonsäuren und einem Alkohol mit 1 bis 12 Kohlenstoffatomen,

- 1 bis 10 Gewichtsteile einer Polyepoxidverbindung (B) und
- 0,02 bis 2 Gewichsteile mindestens eines Katalysators (C).

10. Zusammensetzung nach Anspruch 9, dadurch gekennzeichnet, daß sie erhalten wurde durch Trockenmischen einer das Polymer und den Katalysator enthaltenden ersten Muttermischung, einer das Polymer und die Polyepoxidverbindung enthaltenden zweiten Muttermischung und gegebenenfalls eines nicht beteiligten Polymers, und daß sie in Pulver- oder Granulatform vorliegt.

11. Verfahren zur Herstellung einer Zusammensetzung nach Anspruch 9, dadurch gekennzeichnet, daß es darin besteht, daß die Mischung aus dem Polymer, der Polyepoxidverbindung und dem Katalysator bei einer Temperatur, die höher als die oder gleich der Schmelztemperatur des Polymers und niedriger als oder gleich 150°C ist, während einer Dauer zwischen 1 Minute und 15 Minuten gemischt werden.

12. Anwendung einer Zusammensetzung nach Anspruch 9 oder 10, zum Überziehen eines Substrats durch Vernetzen nach dem Verfahren nach Anspruch 1.

13. Verwendung nach Anspruch 12, dadurch gekennzeichnet, daß das Substrat ein elektrisches Kabel ist.

14. Verwendung nach Anspruch 12, dadurch gekennzeichnet, daß die genannte Zusammensetzung als Heißschmelzkleber verwendet wird, wobei das Polymer einen Fließindex zwischen 5 und 500 dg/min besitzt.

## Claims

1. Crosslinking process consisting in reacting a polymer containing units derived from ethylene and units derived from maleic anhydride with at least one polyepoxide compound in the presence of at least one catalyst, characterized in that the reaction is carried out at a temperature of 10° C to 160° C, at a pressure of 1 to 300 bars and for at least 0.5 hours, and in that the polymer is obtained by copolymerization of ethylene and maleic anhydride at high temperature and at high pressure in the presence of a free-radical initiator and, if appropriate, in the presence of propylene and/or of at least one ester of an unsaturated carboxylic acid and of an alcohol containing from 1 to 12 carbon atoms and contains from 42 to 99 % by weight of units derived from ethylene and, if appropriate, from an α-olefin, from 1 to 8 % by weight of units derived from maleic anhydride and from 0 to 50 % by weight of units derived from at least one third monomer chosen from esters of unsaturated carboxylic acids and of an alcohol containing from 1 to 12 carbon atoms.

2. Process according to Claim 1, characterized in that the quantity of polyepoxide compound is between 1 and 10 parts by weight per 100 parts by weight of polymer.

3. Process according to one of Claims 1 and 2, characterized in that the molar ratio

$$\frac{\text{epoxide functional groups in the polyepoxide compound}}{\text{anhydride functional groups in the polymer}}$$

is between 0.5 and 1.1,

4. Process according to one of Claims 1 to 3, characterized in that the polyepoxide compound is an aliphatic compound.

5. Process according to Claim 4, characterized in that the alphatic polyepoxide compound is chosen from neopentyl glycol diglycidyl ether, epoxidized soyabean oil and 1,6-hexanediol diglycidyl ether.

6. Process according to one of Claims 1 to 5, characterized in that the catalyst is a tertiary amine.

7. Process according to one of Claims 1 to 6, characterized in that the catalyst is employed at a concentration of 0.02 to 2 parts by weight per 100 parts by weight of polymer.

8. Process according to Claim 1, characterized in that the said third monomer is chosen from the alkyl acrylates, methacrylates and maleates in which the alkyl group contains from 1 to 12 carbon atoms.

9. Crosslinkable composition capable of being used in a process as claimed in one of Claims 1 to 8 and comprising:

(A) a polymer of ethylene and maleic anhydride,

(B) at least one polyepoxide compound, and

(C) at least one catalyst of reaction between the anhydride functional groups and the epoxide functional groups, characterized in that the composition contains:

- 100 parts by weight of a polymer (A) obtained by copolymerization of ethylene and maleic anhydride at high temperature and at high pressure in the presence of a free-radical initiator and in the presence, if appropriate, of propylene and/or of at least one ester of an unsaturrated carboxylic acid and of an alcohol containing from 1 to 12 carbon atoms and containing:

a) from 42 to 99 % by weight of units derived from ethylene and, if appropriate, from an α-olefin,

b) from 1 to 8 % by weight of units derived from maleic anhydride, and

c) from 0 to 50 % by weight of units derived from at least one third monomer chosen from esters of unsaturated carboxylic acids and of an alcohol containing from 1 to 12 carbon atoms,

- from 1 to 10 parts by weight of a polyepoxide compound (B), and

- from 0.02 to 2 parts by weight of at least one catalyst (C).

10. Composition according to Claim 9, characterized in that it is obtained by dry mixing a first masterbatch containing the polymer and the catalyst, and a second masterbatch containing the polymer and the polyepoxide compound and, if appropriate, adjuvant-free polymer, and which is in the form of powder or granules.

11. Process for preparing a composition according to Claim 9, characterized in that it consists in kneading the mixture of polymer, polyepoxide compound and catalyst at a temperature higher than or equal to the melting temperature of the polymer and lower than or equal to 150° C for a period of between 1 minute and 15 minutes.

12. Application of a composition according to one of Claims 9 and 10 to the coating of a substrate, by crosslinking in accordance with the process according to Claim 1.

13. Application according to Claim 12, characterized in that the substrate is an electrical cable.

14. Application according to Claim 12, characterized in that the said composition is employed as a melt adhesive, the polymer having a melt index of between 5 and 500 dg/min.